(19) Europäisches Patentamt
European Patent Office
Office européen des brevets

(11) **EP 3 069 339 B1**

(12) **FASCICULE DE BREVET EUROPEEN**

(45) Date de publication et mention de la délivrance du brevet:
**30.10.2019 Bulletin 2019/44**

(21) Numéro de dépôt: **14798812.5**

(22) Date de dépôt: **12.11.2014**

(51) Int Cl.:
**G10L 19/107** (2013.01)    **H04L 25/03** (2006.01)

(86) Numéro de dépôt international:
**PCT/EP2014/074388**

(87) Numéro de publication internationale:
**WO 2015/071320 (21.05.2015 Gazette 2015/20)**

(54) **PROCÉDÉ DE TRANSMISSION DE PAQUETS DANS UN RÉSEAU ET RÉSEAU DANS LEQUEL EST MIS EN OEUVRE LEDIT PROCÉDÉ**

VERFAHREN ZUR ÜBERTRAGUNG VON PAKETEN IN EINEM NETZWERK UND NETZWERK, IN DEM DIESES VERFAHREN DURCHGEFÜHRT WIRD

METHOD FOR TRANSMISSION OF PACKETS IN A NETWORK AND NETWORK IN WHICH SAID METHOD IS IMPLEMENTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361214**

(43) Date de publication de la demande:
**21.09.2016 Bulletin 2016/38**

(73) Titulaire: **Sagem Défense Sécurité**
**92100 Boulogne-Billancourt (FR)**

(72) Inventeur: **CHIODINI, Alain**
**F-92100 Boulogne Billancourt (FR)**

(74) Mandataire: **Cabinet Le Guen Maillet**
**3, impasse de la Vigie**
**CS 71840**
**35418 Saint-Malo Cedex (FR)**

(56) Documents cités:
- **FASOLO E: "Network coding techniques", INTERNET CITATION, 7 mars 2004 (2004-03-07), pages 1-14, XP002484416, Extrait de l'Internet: URL:www.cs.virginia.edu/~yw5s/Network%20coding.ppt [extrait le 2008-06-11]**
- **CEDRIC WESTPHAL ED - HUNG-YU WEI ET AL: "Layered IP Header Compression for IP-enabled Sensor Networks", COMMUNICATIONS, 2006. ICC '06. IEEE INTERNATIONAL CONFERENCE ON, IEEE, PI, 1 juin 2006 (2006-06-01), pages 3542-3547, XP031025867, ISBN: 978-1-4244-0354-7**
- **HAMMONS A R ET AL: "On the Eavesdrop Vulnerability of Random Network Coding over Wireless Networks", DISTRIBUTED COMPUTING SYSTEMS WORKSHOPS, 2009. ICDCS WORKSHOPS '09. 29TH IEEE INTERNATIONAL CONFERENCE ON, IEEE, PISCATAWAY, NJ, USA, 22 juin 2009 (2009-06-22), pages 201-207, XP031485905, ISBN: 978-0-7695-3660-6**

**Description**

La présente invention concerne un procédé de transmission de paquets dans un réseau, ledit paquet étant constitué d'au moins un champ d'en-tête et un champ de données constitué d'une liste de données appartenant à un ensemble de données prédéterminées.

La présente invention trouve notamment application dans les réseaux de communication où de tels messages peuvent servir à la signalisation. Les données sont par exemple respectivement affectées à des éléments du réseau concerné, par exemple des nœuds du réseau, et le message à transmettre ne comporte que les données relatives aux seuls éléments concernés par ce message.

Un procédé selon l'invention trouve intérêt dans la diminution des ressources nécessaires à la transmission de messages de ce type.

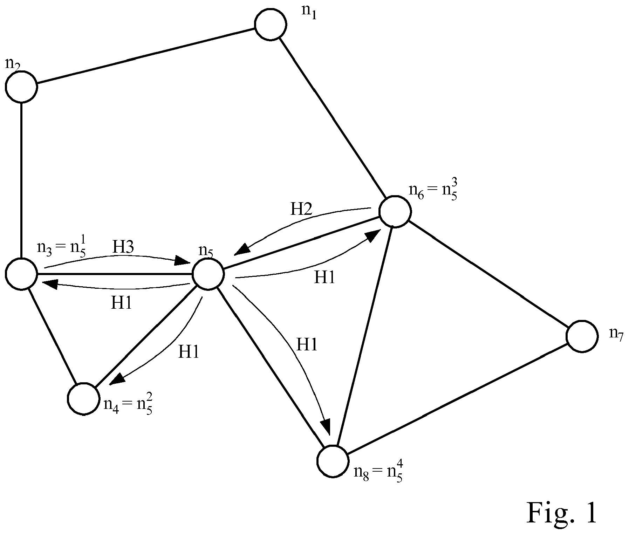

Pour illustrer le problème que cherche à résoudre la présente invention, à la Fig. 1, on considère un réseau de télécommunication qui comporte N nœuds $n_1$ à $n_8$ (ici N = 8) auxquels sont respectivement affectées N adresses $A_1$ à $A_N$ (ici $A_1$ à $A_8$). Dans un tel réseau, afin de connaître l'état de tous les liens qui relient les nœuds entre eux, chaque nœud diffuse, sur un canal approprié, des messages de détection de liens conformément à un protocole de routage. Un exemple d'un tel protocole de routage est le protocole OLSR (Optimized Link State Routing Protocol : protocole optimisé de routage à état de lien) décrit dans la RFC3626 (Request for Comments : demande de commentaires) et les messages de détection de liens sont alors des messages dits messages HELLO.

On rappelle qu'un tel protocole est un protocole de routage proactif essentiellement destiné aux réseaux maillés sans fil, également nommés réseaux *ad-hoc.*

Les messages HELLO sont donc émis périodiquement par tous les nœuds constituant le réseau et servent à diffuser l'état et le type de lien qui existe entre le nœud émetteur et ses voisins les plus proches, dits aussi voisins à un saut. Ils servent également à la détection des voisins à un saut d'un nœud émetteur.

Par exemple, si l'on considère à la Fig. 1 le nœud $n_5$, celui-ci émet périodiquement des messages HELLO, référencés ici H1, à ses nœuds voisins à un saut, en l'occurrence les nœuds $n_3$, $n_4$, $n_6$ et $n_8$. Selon le protocole OLSR, seuls certains nœuds répondent à ces messages HELLO. Il s'agit du sous-ensemble des nœuds (ici les nœuds $n_3$ et $n_6$) qui couvrent tous les nœuds voisins à deux sauts (les nœuds $n_1$, $n_2$, $n_4$, $n_7$ et $n_8$) du nœud émetteur $n_5$. Ces nœuds $n_3$ et $n_6$ répondent au nœud $n_5$ sous forme des messages HELLO référencés H2 et H3.

Si on considère le nœud $n_5$, celui-ci a quatre nœuds voisins à un saut que l'on peut référencer $n_5^k$ avec k = 1 à 4. En l'occurrence, le nœud $n_5^1$ est le nœud n3, le nœud $n_5^2$ est le nœud n4, le nœud $n_5^3$ est le nœud n6 et le nœud $n_5^4$ est le nœud n8. De manière générale, si on considère un nœud $n_n$ d'un réseau de N nœuds, celui-ci a K nœuds voisins à un saut que l'on peut noter $n_n^k$ avec k = 1 à K. L'ensemble des nœuds $n_n^k$ avec k = 1 à K est un sous-ensemble de l'ensemble des nœuds $n_n$ avec n = 1 à N du réseau.

Plus spécifiquement, un message HELLO contient notamment la liste des adresses $A^k$ avec k = 1 à K dans le réseau des nœuds voisins à un saut $n_n^k$ du nœud émetteur $n_n$. A la Fig. 1, le message H1 émis par le nœud $n_5$ contient, dans son en-tête, sa propre adresse $A_5$, et, dans ses données, les adresses $A^1 = A_3$, $A^2 = A_4$, $A^3 = A_6$ et $A^4 = A_8$. Parmi les nœuds voisins à un saut $n_n^k$, certains possèdent un lien symétrique avec ledit nœud émetteur $n_n$, certains sont seulement entendus par ledit nœud émetteur $n_n$ et certains ont été perdus depuis la dernière émission par le nœud émetteur $n_n$. Les messages HELLO sont encapsulés dans des datagrammes, dits datagrammes OLSR, lesquels sont modulés pour transmission puis encapsulés dans des paquets de la couche physique, dits aussi paquets physiques. La modulation en question est par exemple une modulation de type GFSK (Gaussian Frequency Shift Keying : modulation par saut de fréquence gaussien), ou tout autre type : QPSK, MSK, GMSK, etc.

Les datagrammes relatifs à ces messages HELLO sont de taille variable ce qui a pour conséquence, lors du passage à travers la couche physique où ils sont modulés sous forme d'un ou plusieurs paquets, l'émission d'un nombre variable de paquets physiques. Ainsi, lorsque, pour un nœud donné $n_n$, le nombre de ses voisins à un saut croît, passant de K nœuds voisins à un saut à K' nœuds, avec K' > K, le nombre de paquets physiques en couche physique croît quasi proportionnellement. Aussi, il peut en résulter des congestions du fait notamment que le canal utilisé pour leurs transmissions a une capacité limitée.

Pour diminuer ce risque de congestion, il est possible d'augmenter le temps entre deux émissions des messages HELLO, mais le rafraîchissement de la topologie du réseau ne devient plus assez rapide.

Les messages du protocole OLSR dits "TC" sont des messages qui ont une structure telle qu'il ne comporte qu'un seul en-tête $E_0$ contenant lui-même un champ dit "ANSN" incorporant un numéro de séquence (se reporter à la RFC3626 pour sa fonction) et une liste des adresses $A^1$ à $A^K$ des nœuds à un saut $n_n^k$ avec k = 1 à K dudit nœud émetteur $n_n$. Les adresses $A^1$ à $A^K$ appartiennent aussi à l'ensemble de toutes les adresses $A_1$ à $A_N$ de tous les nœuds du réseau concerné. La problématique est la même que pour les messages HELLO.

Le but de la présente invention est de proposer un procédé qui permette non seulement, généralement, la réduction du nombre de paquets physiques transmis pour la transmission d'un message du type mentionné ci-dessus mais aussi de rendre ce nombre fixe en vue d'optimiser la ressource, notamment la capacité du canal utilisé pour leurs transmissions.

La publication technique de FASOLO E: "Network coding techniques", du 07-03-2004 explique comment la technique du codage réseau eut aussi contribuer à optimiser les ressources de canaux de communication.

A cet effet, la présente invention concerne un procédé de transmission de paquets dans un réseau selon la revendication 1, le réseau correspondant selon la revendication 11 et un programme inscrit sur un support selon la revendication 12. Des modes de réalisation préférés sont décrits par les revendications dépendantes.

Les caractéristiques de l'invention mentionnées ci-dessous, ainsi que d'autres, apparaîtront plus clairement à la lecture de la description suivante d'exemples de réalisation, ladite description étant faite en relation avec les dessins joints, parmi lesquels :

La Fig. 1 est une vue d'un réseau auquel peuvent s'appliquer les procédés d'émission et de réception de paquets selon la présente invention,

Les Figs. 2a et 2b illustrent respectivement le procédé d'émission et le procédé de réception d'un paquet selon la présente invention, et

Les Figs. 3a et 3b illustrent respectivement le procédé d'émission et le procédé de réception d'un paquet du HELLO selon la présente invention.

On considère un réseau qui comporte N nœuds dont les adresses respectives sont prédéterminées, égales à $A_1$ à $A_N$ et différentes les unes des autres. Un exemple d'un tel réseau est représenté à la Fig. 1.

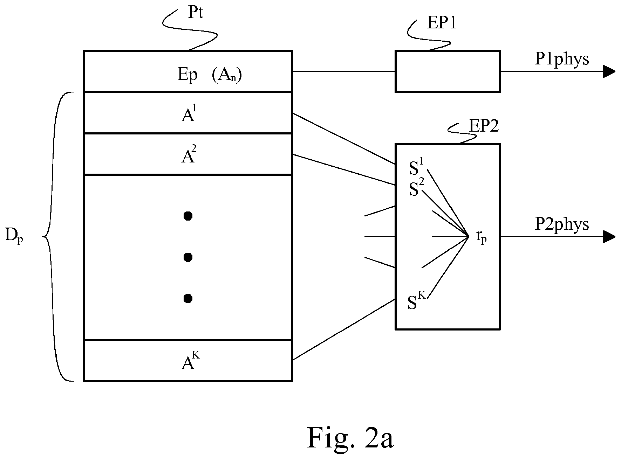

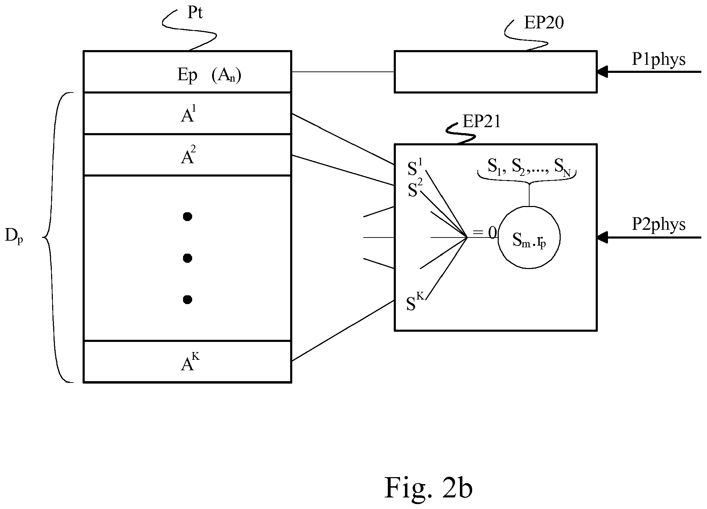

Dans ce réseau, on considère un nœud $n_n$, dit nœud émetteur, d'adresse $A_n$ qui émet un paquet Pt (voir Fig. 2) comprenant, d'une part, un champ d'en-tête de paquet $E_p$ dans lequel figure sa propre adresse $A_n$ et, d'autre part, un champ de données $D_p$ dans lequel figure une liste de K adresses de nœuds $A^k$ avec k = 1 à K, prises parmi les N adresses $A_1$ à $A_N$. Chaque adresse $A^k$ est par exemple l'adresse d'un nœud qui entretient une relation particulière avec le nœud d'adresse $A_n$, comme l'adresse d'un nœud voisin à un saut du nœud d'adresse $A_n$. De manière générale, l'adresse A' est différente de l'adresse $A_i$, avec i = 1 à K.

Si l'on considère le nœud $n_5$ de la Fig. 1, le paquet Pt comporte un en-tête $E_p$ qui comporte l'adresse $A_5$ et une partie de données $D_p$ qui comporte les adresses $A^1 = A_3$, $A^2 = A_4$, $A^3 = A_6$ et $A^4 = A_8$.

Une étape préalable du procédé de transmission de paquets selon la présente invention consiste à associer bi-univoquement à chaque donnée $A_i$ avec i = 1 à N, une séquence $S_i$ formant ainsi N séquences différentes les unes des autres et ni orthogonales ni colinéaires entre elles. Après cette étape préalable, toutes les séquences $S_i$ sont connues par tous les nœuds du réseau.

Cette étape est par exemple mise en œuvre à la mise en place du réseau.

Chaque séquence $S_i$ peut être considérée comme un vecteur à P composantes $a_1^i$ à $a_P^i$, par exemple, prenant des valeurs complexes. Par exemple, pour chaque séquence $S_i$, les composantes $a_1^i$ à $a_P^i$ sont déterminées de manière aléatoire ou pseudoaléatoire. Ainsi, les séquences $S_i$ sont non-orthogonales entre elles, ni colinéaires. Plus exactement, plus le nombre P de composantes $a_1^i$ à $a_P^i$ est important et plus la probabilité que deux séquences $S_i$ et $S_j$ (Vi et j ∈ {1, ..., N}, i ≠ j) soient orthogonales est faible.

Selon un mode de réalisation particulier, les composantes $a_1^i$ à $a_P^i$ d'une séquence $S_i$ se déduisent de celles de la séquence $S_{i-1}$ par permutation circulaire.

On décrit maintenant la phase d'émission d'un procédé de transmission de paquets Pt selon l'invention.

Une première étape EP1 de cette phase d'émission consiste à encapsuler le champ d'en-tête $E_p$ du paquet à transmettre Pt dans un premier paquet physique P1phys, puis à émettre sur le réseau ledit paquet physique P1phys. Dans son en-tête, ce dernier comporte un champ incluant l'adresse $A_n$ du nœud émetteur $n_n$ ou la séquence $S_n$ correspondant à cette adresse $A_n$.

Une seconde étape EP2 du procédé d'émission consiste à déterminer les coordonnées d'un vecteur de transmission $r_p$ qui ne soit orthogonal qu'à toutes les séquences $S^1$ à $S^K$, à l'exclusion de toute autre séquence, correspondant aux adresses $A^1$ à $A^K$ contenues dans le champ de données $D_p$ du paquet à transmettre Pt. Cette étape consiste également à encapsuler le vecteur de transmission $r_p$ dans un second paquet physique P2phys, puis à émettre ledit paquet physique P2phys. Dans son en-tête, le paquet physique P2phys, à l'instar du paquet physique P1phys, comporte un champ incluant l'adresse $A_n$ du nœud émetteur $n_n$ ou la séquence $S_n$ correspondant à cette adresse $A_n$.

A la réception de chacun des paquets physiques P1phys et P2phys, le nœud récepteur $n_q$ met en œuvre la phase de réception d'un procédé de transmission de paquets qui est maintenant décrite en relation avec la Fig. 2b.

Les paquets physiques P1phys et P2phys sont mis en relation l'un avec l'autre car ils portent chacun, dans leurs préambules respectifs, soit l'adresse $A_n$ du nœud émetteur $n_n$, soit la séquence $S_n$ correspondant à cette adresses $A_n$.

Une première étape EP20 dudit procédé de réception consiste à lire le premier paquet physique P1phys pour recouvrer l'en-tête $E_p$.

Une seconde étape EP21 dudit procédé de transmission consiste, pour le nœud récepteur $n_q$, à la réception du second paquet physique P2phys, à lire le vecteur $r_p$ encapsulé dans ledit paquet physique et à vérifier s'il est orthogonal ou pas à chacune des séquences $S_p$ avec p = 1 à N. S'il est orthogonal à une séquence $S_p$, celle-ci est l'une des séquences S' à $S^K$ correspondant aux adresses $A^1$ à $A^K$ présentes dans ledit paquet originaire Pt et l'adresse $A_p$ correspondant à cette séquence $S_p$ était contenue dans le champ $D_p$ du paquet originaire Pt émis par le nœud émetteur $n_n$. A l'inverse, s'il n'est pas orthogonal à une séquence $S_p$, celle-ci n'est pas l'une des séquences S' à $S^K$ et l'adresse $A_p$ correspondant à ladite séquence $S_p$ n'était pas contenue dans le champ $D_p$ du paquet originaire Pt émis par le nœud émetteur $n_n$.

Ainsi, les adresses $A^1$ à $A^K$ qui correspondent aux seules séquences $S^1$ à $S^K$ correspondant aux adresses $A^1$ à $A^K$ présentes dans ledit paquet originaire Pt et sont orthogonales audit vecteur de transmission $r_p$ sont recouvrées.

Avantageusement, la vérification de l'orthogonalité du vecteur de transmission $r_p$ à une séquence $S_p$ consiste à effectuer le produit scalaire hermitien $S_p.r_p$. S'il n'est pas nul, la séquence $S_p$ n'est pas orthogonale au vecteur $r_p$ et, au contraire, s'il est nul, la séquence $S_p$ est orthogonale au vecteur $r_p$ et est donc égale à une des séquences $S^k$, avec $k \in \{1, ...,K\}$.

Pour tenir compte du rapport signal-sur-bruit du signal reçu par le nœud récepteur, le produit scalaire hermitien $S_p.r_p$ est comparé à un seuil $T_{SNR}$. S'il est inférieur à ce seuil, le produit scalaire hermitien est considéré comme nul et inversement.

Pour calculer le vecteur $r_p$, on propose deux méthodes, maintenant décrites.

Selon la première méthode, une première étape consiste à déterminer un sous-espace vectoriel $E_K$ orthonormé qui est constitué de K vecteurs unitaires $e_1$ à $e_K$ deux à deux orthogonaux respectivement obtenus à partir des séquences $S^1$ à $S^K$, par exemple par une méthode d'orthonormalisation dite de Gram-Schmidt.

On rappelle que, par cette méthode d'orthonormalisation, les vecteurs $e_1$ à $e_K$ sont obtenus de la manière suivante :

$$e_1 = S^1 / \|S^1\|$$

et

$$e_j = u_j / \|u_j\| \text{ avec } u_j = S^j - \sum_{p=1}^{p=j-1} proj_{u_p}(S^p) \text{ pour tout } j = 2 \text{ à K.}$$

$\|vecteur\|$ représente la norme d'un vecteur et l'opérateur $proj_{u_p}(S^p)$ est le vecteur résultant de la projection du vecteur $S^p$ sur l'axe matérialisé par le vecteur $u_p$.

Une seconde étape consiste à déterminer le vecteur $r_p$ qui résulte de la projection du vecteur constitué d'une séquence, dit de transmission, séquence $S_t$ sur un sous-espace vectoriel $E_{N-K}$ (de dimension N-K) supplémentaire au sous-espace vectoriel $E_K$ et orthogonal à celui-ci. La séquence de transmission $S_t$ n'est ni orthogonale ni colinéaire aux séquences $S_1$ à $S_N$.

Le vecteur $r_p$ peut être calculé au moyen de l'expression suivante :

$$r_p = \left\{ \prod_{k=1}^{K} \left( I_N - e_k.e_k^H \right) \right\}.S_t$$

où $I_N$ représente la matrice identité de dimensions NxN, l'exposant H indiquant l'opérateur "hermitien" (id est transposé conjugué).

Le vecteur $r_p$ est donc orthogonal à chacun des vecteurs constitués des séquences $S^1$ à $S^K$ à l'exclusion de tout autre.

Selon une seconde méthode, le vecteur $r_p$ est calculé comme étant égal, à une constante près, à la première colonne de la matrice M' inverse généralisée (appelée pseudo-inverse de Moore-Penrose) de la matrice M de dimensions (K+1) x P:

$$M = \begin{pmatrix} S_t \\ S^1 \\ \vdots \\ S^K \end{pmatrix}$$

constituée par la séquence de transmission $S_t$, d'une part, et par les séquences $S^1$ à $S^K$.

Avantageusement, pour l'émission par un nœud $n_n$ d'adresse $A_n$, la séquence de transmission $S_t$ est la séquence $S_n$ qui correspond à cette adresse $A_n$.

Selon un aspect de la présente invention, dans un système de télécommunication numérique, les séquences $S_i$ sont des signaux modulés numériquement. Leur longueur est donc de P symboles complexes. Cette modulation peut être du type GFSK, $\pi/2$-BPSK, $\pi/4$-QPSK, etc.

On considère maintenant une application de l'invention à la diffusion de messages du type "HELLO" dans un réseau de télécommunication, par exemple sans fil du type DECT (Digital Enhanced Cordless Télécommunications : Télécommunication numérique améliorée sans fil - Voir la Norme ETSI EN300 175-1 à 175-8).

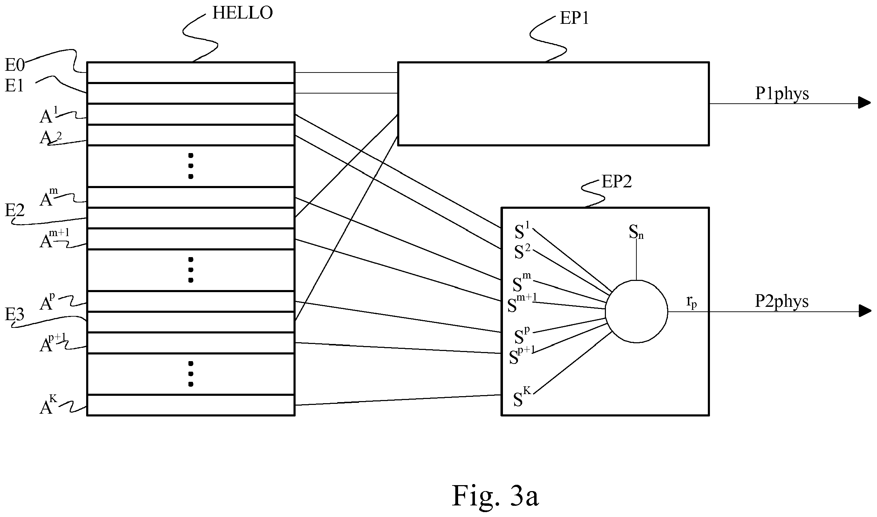

A la Fig. 3a, on a représenté un datagramme d'un message HELLO, en l'occurrence, émis par un nœud $n_n$ qui possède K nœuds voisins référencés $n_n^k$ avec k = 1 à K. Il est constitué d'un en-tête $E_0$ contenant les champs dits "Htime" et "Willigness" (le lecteur intéressé peut se reporter à la RFC3626 pour leurs fonctions respectives), des en-têtes $E_1$ à $E_M$ (ici M =3) respectivement suivis d'une liste de données relatives aux adresses $A^1$ à $A^K$ des nœuds voisins à un saut $n_n^k$ avec k = 1 à K dudit nœud émetteur $n_n$. Chaque en-tête $E_m$ (m = 1 à M) contient, d'une part, un champ dit "Link Code" qui détermine l'état du lien (Symétrique, Asymétrique (ou encore simplement entendu), perdu, etc.) existant entre le nœud émetteur $n_n$ et chaque nœud voisin à un saut $n_n^k$ dudit nœud émetteur $n_n$ dont l'adresse dans le réseau se trouve juste après ledit en-tête et, d'autre part, un champ dit "Link Message Size" relatif à la dimension du message concernant cet état de lien.

Dans une première étape EP1 de la phase émission du procédé de transmission d'un message HELLO, les en-têtes $E_0$, $E_1$, $E_2$ et $E_3$ sont encapsulés dans un paquet à transmettre P1t lequel est modulé, par exemple par modulation GFSK, pour sa transmission effective en tant que paquet physique P1phys. Dans le système de télécommunications DECT, le paquet P1phys est avantageusement du type P32 (voir ETSI EN300 175-2) occupant 420 ou 424 symboles dont 320 pour le champ B (voir ETSI EN300 175-3) occupé par le paquet P1t modulé. Il comporte, dans son en-tête, soit un champ incluant l'adresse $A_n$ du nœud émetteur $n_n$ soit la séquence $S_n$ correspondant à cette adresse $A_n$.

Une seconde étape EP2 du procédé d'émission consiste à déterminer le vecteur $r_p$ en fonction des séquences $S^1$ à $S^K$ correspondant respectivement aux adresses $A^1$ à $A^K$ comme explicité ci-dessus. Dans le système de télécommunications DECT, le vecteur $r_p$ est avantageusement encapsulé dans un paquet physique P2phys, du type P32, et plus particulièrement, dans le champ B de ce paquet physique P2phys. A l'instar du paquet physique P1phys, il comporte, dans son en-tête, soit un champ incluant l'adresse $A_n$ du nœud émetteur $n_n$ soit la séquence $S_n$ correspondant à cette adresse $A_n$.

Le vecteur $r_p$ est de mêmes dimensions que les séquences $S_1$ à $S_N$. Avantageusement, les séquences $S_1$ à $S_N$ sont constituées de 320 composantes $a_1$ à $a_{320}$.

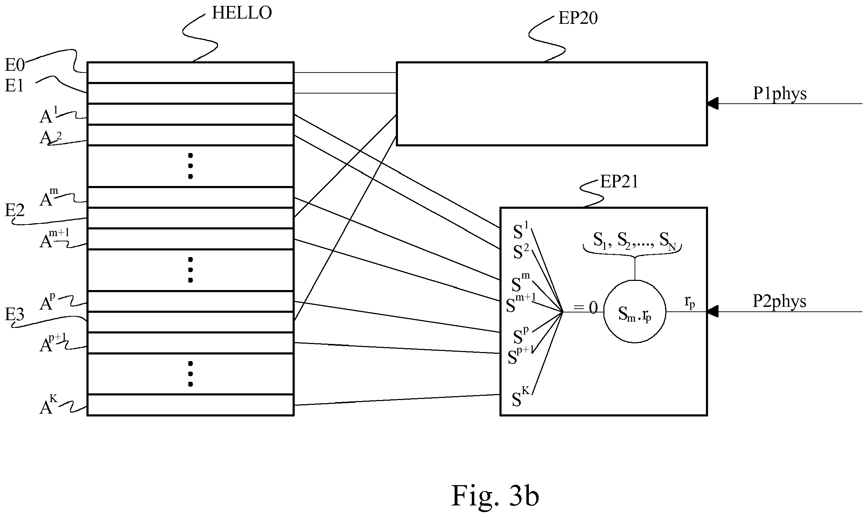

A la Fig. 3b, on a illustré la phase réception d'un procédé de transmission selon la présente invention. Dans une étape E20, le premier paquet physique P1phys est démodulé et le paquet P1t est recouvré. Les en-têtes $E_0$, $E_1$, $E_2$ et $E_3$ du paquet P1t sont lus. L'en-tête $E_0$ contient l'adresse $A_n$ du nœud émetteur qui peut ainsi être identifié.

La seconde étape E21 de cette phase de réception consiste à lire le vecteur $r_p$ encapsulé dans ledit paquet physique P2phys et à vérifier s'il est orthogonal ou pas à chacune des séquences $S_p$ avec p = 1 à N. S'il est orthogonal à une séquence $S_p$, celle-ci est l'une des séquences $S^1$ à $S^K$ et l'adresse $A_p$ correspondant à cette séquence $S_p$ était contenue dans le champ $D_p$ du paquet originaire Pt émis par le nœud émetteur $n_n$. A l'inverse, s'il n'est pas orthogonal

à une séquence $S_p$, celle-ci n'est pas l'une des séquences $S^1$ à $S^K$ et l'adresse $A_p$ correspondant à ladite séquence $S_p$ n'était pas contenue dans le champ $D_p$ du paquet originaire Pt émis par le nœud émetteur $n_n$.

Ainsi, le message HELLO peut être recouvré à partir des paquets physiques P1phys et P2phys.

Les paquets TC du protocole OLSR ne comportent qu'un seul en-tête et sont donc conformes au paquet Pt des Figs. 2a et 2b.

Ainsi, dans une première étape EP1 de la phase d'émission du procédé de transmission d'un message TC, l'en-tête $E_p$ est encapsulé dans un paquet à transmettre P1t lequel est modulé, par exemple par modulation GFSK, pour sa transmission effective en tant que paquet physique P1phys. Une seconde étape EP2 de cette phase d'émission consiste à déterminer le vecteur $r_p$ en fonction des séquences $S^1$ à $S^K$ correspondant respectivement aux adresses $A^1$ à $A^K$ comme explicité ci-dessus. Dans le système de télécommunications DECT, les paquets physiques P1phys et P2phys sont avantageusement du type P32 occupant 420 ou 424 symboles dont 320 pour le champ B (voir ETSI EN300 175-3) occupé, pour chaque paquet physique, par le paquet P1t modulé et par le vecteur $r_p$.

Dans la description qui vient d'être faite, on a considéré des paquets dont le champ de données comporte une liste de données $A^1$ à $A^K$ appartenant à un ensemble de données $A_1$ à $A_N$ qui sont respectivement représentatives des adresses des nœuds $n_1$ à $n_N$ du réseau de communication. C'est pour cette raison que ces données ont été appelées adresses. Mais, il est entendu que le procédé de transmission de l'invention s'applique indépendamment de ce que représentent les données $A_1$ à $A_N$. Le terme "donnée" peut ainsi être utilisé pour désigner ces données $A_1$ à $A_N$.

## Revendications

1. Procédé de transmission de paquets dans un réseau, ledit paquet étant constitué d'au moins un champ d'en-tête et un champ de données constitué d'une liste de données appartenant à un ensemble de données prédéterminées, **caractérisé en ce qu'**il inclut les étapes suivantes :

   - une étape préalable d'affectation à chaque donnée prédéterminée d'une séquence numérique telle qu'une séquence ne soit ni orthogonale, ni colinéaire à une autre séquence,

   et, à l'émission dudit paquet,

   - une étape d'encapsulation du ou des champs d'en-tête dudit paquet dans un premier paquet physique et d'émission dudit paquet physique,
   - une étape de calcul d'un vecteur de transmission qui soit tel qu'il ne soit orthogonal qu'aux séquences correspondant aux données contenues dans ledit paquet, d'encapsulation dudit vecteur de transmission dans un second paquet physique et d'émission dudit paquet physique,

   et, à la réception de deux paquets physiques émis,

   - une étape de lecture dudit premier paquet physique afin de recouvrer le ou les en-têtes du paquet originaire, et
   - une étape de lecture dudit second paquet physique pour recouvrer ledit vecteur de transmission, et de recouvrement des données qui correspondent aux seules séquences qui sont orthogonales audit vecteur de transmission.

2. Procédé de transmission selon la revendication 1, **caractérisé en ce que** le calcul dudit vecteur de transmission comporte les étapes suivantes :

   - une étape de détermination d'un sous-espace vectoriel orthonormé de vecteurs unitaires deux à deux orthogonaux respectivement obtenus à partir des séquences correspondant respectivement aux données présentes dans ledit paquet, et
   - une étape de projection d'une séquence, dite séquence de transmission, sur le sous-espace vectoriel supplémentaire et orthogonal audit sous-espace-vectoriel.

3. Procédé de transmission selon la revendication 2, **caractérisé en ce que** ledit sous-espace vectoriel orthonormé est déterminé à une méthode d'orthonormalisation de Gram-Schmidt.

4. Procédé de transmission selon la revendication 1, **caractérisé en ce que** le vecteur de transmission est calculé comme étant égal, à une constante près, à la première colonne de la matrice pseudo-inverse de Moore-Penrose de la matrice constituée, pour la première ligne, d'une séquence, dite séquence de transmission, et pour les lignes suivantes, des séquences qui correspondent aux données présentes dans ledit paquet.

**5.** Procédé de transmission selon une des revendications 1 à 4, **caractérisé en ce que** ledit réseau est constitué d'une pluralité de nœuds, lesdites données prédéterminées étant les adresses de chacun des nœuds dudit réseau.

**6.** Procédé de transmission selon la revendication 5 lorsque celle-ci dépend des revendications 2 à 4, **caractérisé en ce que** ladite séquence de transmission est la séquence qui correspond à l'adresse du nœud émetteur dudit paquet.

**7.** Procédé de transmission selon une des revendications précédentes, **caractérisé en ce que** l'étape de recouvrement des données qui correspondent aux seules séquences qui sont orthogonales audit vecteur de transmission consiste à effectuer itérativement le produit scalaire hermitien d'une séquence parmi l'ensemble des séquences et le vecteur de transmission, à comparer ledit produit scalaire hermitien à une valeur seuil et à déclarer ladite séquence comme présente dans le champ de données du paquet originaire lorsque ledit produit scalaire hermitien est inférieur à ladite valeur seuil.

**8.** Procédé de transmission selon la revendication 6 ou 7, **caractérisé en ce que** ledit réseau est un réseau de télécommunications numérique du type DECT et ledit paquet à transmettre est un paquet transportant un message d'un protocole de routage comportant la liste des adresses des nœuds à un saut du réseau.

**9.** Procédé de transmission selon une des revendications précédentes, **caractérisé en ce qu'**à ladite étape d'affectation, les composantes de chaque séquence sont déterminées de manière aléatoire ou pseudoaléatoire.

**10.** Procédé de transmission selon la revendication 8, **caractérisé en ce que** les composantes d'une séquence se déduisent de celles de la séquence précédente par permutation circulaire.

**11.** Réseau de transmission de paquets, notamment de paquets constitués d'au moins un champ d'en-tête et un champ de données constitué de données appartenant à un ensemble de données prédéterminées, ledit réseau étant constitué d'une pluralité de nœuds, lesdites données prédéterminées étant les adresses de chacun des nœuds dudit réseau, **caractérisé en ce qu'**il comporte des moyens pour affecter à chaque donnée prédéterminée une séquence numérique telle qu'une séquence ne soit ni orthogonale, ni colinéaire à une autre séquence, et **en ce que** chaque nœud comporte, pour émettre un paquet à transmettre :

- des moyens d'encapsulation du ou des champs d'en-tête dudit paquet dans un premier paquet physique et des moyens d'émission dudit paquet physique,
- des moyens de calcul d'un vecteur de transmission qui soit tel qu'il ne soit orthogonal qu'aux séquences correspondant aux données contenues dans ledit paquet, des moyens d'encapsulation dudit vecteur de transmission dans un second paquet physique et des moyens d'émission dudit paquet physique,

et, **en ce que** chaque nœud comporte, pour la réception de deux paquets physiques émis par un autre nœud,

- des moyens de lecture dudit premier paquet physique afin de recouvrer le ou les en-têtes du paquet originaire, et
- des moyens de lecture dudit second paquet physique pour recouvrer ledit vecteur de transmission, et des moyens de recouvrement des données qui correspondent aux seules séquences qui sont orthogonales audit vecteur de transmission.

**12.** Programme inscrit sur un support et destiné à être chargé dans un dispositif programmable d'un nœud d'un réseau selon la revendication 11, ledit programme comprenant des instructions ou parties de code pour mettre en œuvre les étapes d'un procédé de transmission de paquets selon une des revendications 1 à 10, lorsque ledit programme est exécuté par ledit dispositif programmable.

**Patentansprüche**

**1.** Verfahren zur Übertragung von Paketen in einem Netzwerk, wobei das Paket aus mindestens einem Kopfzeilenfeld und einem Datenfeld besteht, das aus einer Liste von Daten besteht, die zu einer Einheit von vorbestimmten Daten gehören, **dadurch gekennzeichnet, dass** es die folgenden Schritte umfasst:

- einen vorhergehenden Schritt der Zuordnung einer digitalen Sequenz zu jedem vorbestimmten Datenwert derart, dass eine Sequenz weder orthogonal noch kollinear zu einer anderen Sequenz ist,

und beim Senden des Pakets

- einen Schritt der Verkapselung des Kopfzeilenfelds oder der Kopfzeilenfelder des Pakets in einem ersten physischen Paket und des Sendens des physischen Pakets,
- einen Schritt der Berechnung eines Übertragungsvektors, der so ist, dass er nur zu den Sequenzen orthogonal ist, die den im Paket enthaltenen Daten entsprechen, der Verkapselung des Übertragungsvektors in einem zweiten physischen Paket und des Sendens des physischen Pakets,

und bei Empfang von zwei gesendeten physischen Paketen,

- einen Schritt des Lesens des ersten physischen Pakets, um die Kopfzeile(n) des Ursprungspakets wiederzugewinnen, und
- einen Schritt des Lesens des zweiten physischen Pakets, um den Übertragungsvektor wiederzugewinnen, und der Wiedergewinnung der Daten, die nur den Sequenzen entsprechen, die zum Übertragungsvektor orthogonal sind.

2. Übertragungsverfahren nach Anspruch 1, **dadurch gekennzeichnet, dass** die Berechnung des Übertragungsvektors die folgenden Schritte aufweist:

- einen Schritt der Bestimmung eines orthonormierten Vektorteilraums von paarweise orthogonalen Einheitsvektoren, die je ausgehend von den Sequenzen erhalten werden, die je den im Paket vorhandenen Daten entsprechen, und
- einen Schritt der Projektion einer Sequenz, Übertragungssequenz genannt, auf den zusätzlichen und zum Teilvektorraum orthogonalen Teilvektorraum.

3. Übertragungsverfahren nach Anspruch 2, **dadurch gekennzeichnet, dass** der orthonormierte Teilvektorraum mit einem Gram-Schmidtschen Orthonormalisierungsverfahren bestimmt wird.

4. Übertragungsverfahren nach Anspruch 1, **dadurch gekennzeichnet, dass** der Übertragungsvektor als bis auf eine Konstante gleich der ersten Spalte der pseudo-inversen Moore-Penrose-Matrix der Matrix berechnet wird, die für die erste Zeile aus einer Sequenz, Übertragungssequenz genannt, und für die folgenden Zeilen aus den Sequenzen besteht, die den im Paket vorhandenen Daten entsprechen.

5. Übertragungsverfahren nach einem der Ansprüche 1 bis 4, **dadurch gekennzeichnet, dass** das Netzwerk aus einer Vielzahl von Knoten besteht, wobei die vorbestimmten Daten die Adressen jedes der Knoten des Netzwerks sind.

6. Übertragungsverfahren nach Anspruch 5, wenn dieser von den Ansprüchen 2 bis 4 abhängt, **dadurch gekennzeichnet, dass** die Übertragungssequenz die Sequenz ist, die der Adresse des Sendeknotens des Pakets entspricht.

7. Übertragungsverfahren nach einem der vorhergehenden Ansprüche, **dadurch gekennzeichnet, dass** der Schritt der Wiedergewinnung der Daten, die nur den Sequenzen entsprechen, die zum Übertragungsvektor orthogonal sind, darin besteht, iterativ das hermitesche Skalarprodukt einer Sequenz aus der Einheit der Sequenzen und dem Übertragungsvektor auszuführen, das hermitesche Skalarprodukt mit einem Schwellwert zu vergleichen und die Sequenz als im Datenfeld des Ursprungspakets vorhanden zu erklären, wenn das hermitesche Skalarprodukt niedriger als der Schwellwert ist.

8. Übertragungsverfahren nach Anspruch 6 oder 7, **dadurch gekennzeichnet, dass** das Netzwerk ein digitales Telekommunikationsnetzwerk der Art DECT ist, und das zu übertragende Paket ein Paket ist, das eine Nachricht eines Routing-Protokolls transportiert, das die Liste der Adressen der Knoten an einem Hop des Netzwerks aufweist.

9. Übertragungsverfahren nach einem der vorhergehenden Ansprüche, **dadurch gekennzeichnet, dass** im Zuordnungsschritt die Komponenten jeder Sequenz zufällig oder pseudo-zufällig bestimmt werden.

10. Übertragungsverfahren nach Anspruch 8, **dadurch gekennzeichnet, dass** die Komponenten einer Sequenz von denjenigen der vorhergehenden Sequenz durch zirkuläre Permutation abgeleitet werden.

**11.** Netzwerk zur Übertragung von Paketen, insbesondere von Paketen, die aus mindestens einem Kopfzeilenfeld und einem Datenfeld bestehen, das aus Daten besteht, die zu einer Einheit von vorbestimmten Daten gehören, wobei das Netzwerk aus einer Vielzahl von Knoten besteht, wobei die vorbestimmten Daten die Adressen jedes der Knoten des Netzwerks sind, **dadurch gekennzeichnet, dass** es Einrichtungen aufweist, um jedem vorbestimmten Datenwert eine digitale Sequenz zuzuweisen, derart, dass eine Sequenz weder orthogonal noch kollinear zu einer anderen Sequenz ist,
und dass jeder Knoten zum Senden eines zu übertragenden Pakets aufweist:

- Einrichtungen zur Verkapselung des oder der Kopfzeilenfelder des Pakets in einem ersten physischen Paket und Einrichtungen zum Senden des physischen Pakets, Einrichtungen zur Berechnung eines Übertragungsvektors, der so ist, dass er nur zu den Sequenzen orthogonal ist, die den im Paket enthaltenen Daten entsprechen,
- Einrichtungen zur Verkapselung des Übertragungsvektors in einem zweiten physischen Paket und Einrichtungen zum Senden des physischen Pakets,

und dass jeder Knoten für den Empfang von zwei von einem anderen Knoten gesendeten physischen Paketen aufweist

- Einrichtungen zum Lesen des ersten physischen Pakets, um die Kopfzeile(n) des Ursprungspakets wiederzugewinnen, und
- Einrichtungen zum Lesen des zweiten physischen Pakets, um den Übertragungsvektor wiederzugewinnen, und Einrichtungen zur Wiedergewinnung der Daten, die nur den Sequenzen entsprechen, die zum Übertragungsvektor orthogonal sind.

**12.** Programm, das auf einem Träger aufgezeichnet und dazu bestimmt ist, in eine programmierbare Vorrichtung eines Knotens eines Netzwerks nach Anspruch 11 geladen zu werden, wobei das Programm Anweisungen oder Codeteile enthält, um die Schritte eines Übertragungsverfahrens von Paketen nach einem der Ansprüche 1 bis 10 durchzuführen, wenn das Programm von der programmierbaren Vorrichtung ausgeführt wird.

**Claims**

**1.** Method for transmitting packets in a network, the said packet consisting of at least one header field and a data field consisting of a list of data belonging to a set of predetermined data, **characterized in that** it includes the following steps:

- a prior step of assigning each predetermined datum a digital sequence such that a sequence is neither orthogonal to, nor collinear with, another sequence,

and, on sending the said packet,

- a step of encapsulating the header field or fields of the said packet in a first physical packet and of sending the said physical packet,
- a step of calculating a transmission vector which is such that it is orthogonal only to the sequences corresponding to the data contained in the said packet, of encapsulating the said transmission vector in a second physical packet and of sending the said physical packet,

and, on reception of two physical packets sent,

- a step of reading the said first physical packet so as to recover the header or headers of the origin packet, and
- a step of reading the said second physical packet to recover the said transmission vector, and of recovering the data which correspond solely to the sequences which are orthogonal to the said transmission vector.

**2.** Transmission method according to Claim 1, **characterized in that** the calculation of the said transmission vector comprises the following steps:

- a step of determining an orthonormal vector sub-space of pairwise orthogonal unit vectors respectively obtained on the basis of the sequences corresponding respectively to the data present in the said packet, and

- a step of projecting a sequence, termed the transmission sequence, onto the additional vector sub-space orthogonal to the said vector sub-space.

3. Transmission method according to Claim 2, **characterized in that** the said orthonormal vector sub-space is determined in a Gram-Schmidt orthonormalization scheme.

4. Transmission method according to Claim 1, **characterized in that** the transmission vector is calculated as being equal, to within a constant, to the first column of the Moore-Penrose pseudo-inverse matrix of the matrix consisting, for the first row, of a sequence, termed the transmission sequence, and for the following rows, of the sequences which correspond to the data present in the said packet.

5. Transmission method according to one of Claims 1 to 4, **characterized in that** the said network consists of a plurality of nodes, the said predetermined data being the addresses of each of the nodes of the said network.

6. Transmission method according to Claim 5 when the latter depends on Claims 2 to 4, **characterized in that** the said transmission sequence is the sequence which corresponds to the address of the sender node that sent the said packet.

7. Transmission method according to one of the preceding claims, **characterized in that** the step of recovering the data which correspond solely to the sequences which are orthogonal to the said transmission vector consists in iteratively performing the Hermitian scalar product of a sequence from among the set of sequences and the transmission vector, in comparing the said Hermitian scalar product with a threshold value and in declaring the said sequence to be present in the data field of the origin packet when the said Hermitian scalar product is less than the said threshold value.

8. Transmission method according to Claim 6 or 7, **characterized in that** the said network is a digital telecommunications network of the DECT type and the said packet to be transmitted is a packet transporting a message of a routing protocol comprising the list of the addresses of the one-hop nodes of the network.

9. Transmission method according to one of the preceding claims, **characterized in that** in the said assignment step, the components of each sequence are determined in a random or pseudorandom manner.

10. Transmission method according to Claim 8, **characterized in that** the components of a sequence are deduced from those of the previous sequence by circular permutation.

11. Packet transmission network, notably for transmitting packets consisting of at least one header field and a data field consisting of data belonging to a set of predetermined data, the said network consisting of a plurality of nodes, the said predetermined data being the addresses of each of the nodes of the said network, **characterized in that** it comprises means for assigning each predetermined datum a digital sequence such that a sequence is neither orthogonal to, nor collinear with, another sequence,
and **in that** each node comprises, in order to send a packet to be transmitted:

   - means for encapsulating the header field or fields of the said packet in a first physical packet and means for sending the said physical packet,
   - means for calculating a transmission vector which is such that it is orthogonal only to the sequences corresponding to the data contained in the said packet, means for encapsulating the said transmission vector in a second physical packet and means for sending the said physical packet,

and **in that** each node comprises, for the reception of two physical packets sent by another node,

   - means for reading the said first physical packet so as to recover the header or headers of the origin packet, and
   - means for reading the said second physical packet to recover the said transmission vector, and means for recovering the data which correspond solely to the sequences which are orthogonal to the said transmission vector.

12. Program inscribed on a medium and intended to be loaded into a programmable device of a node of a network according to Claim 11, the said program comprising instructions or parts of code for implementing the steps of a method for transmitting packets according to one of Claims 1 to 10, when the said program is executed by the said programmable device.

Fig. 1

Fig. 2a

Fig. 2b

EP 3 069 339 B1

Fig. 3a

Fig. 3b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FASOLO E.** *Network coding techniques,* 07 Mars 2004